# EUROPEAN PATENT SPECIFICATION

(11) **EP 2 587 122 B1**
(45) Date of publication and mention of the grant of the patent: **07.08.2019**
(21) Application number: 11798286.8
(22) Date of filing: 27.06.2011
(51) Int. Cl.: B60Q 1/072

(54) **HEADLIGHT OPTICAL-AXIS ADJUSTMENT APPARATUS**
VORRICHTUNG ZUR EINSTELLUNG DER OPTISCHEN ACHSE VON SCHEINWERFERN
APPAREIL DE RÉGLAGE DE L'AXE OPTIQUE DE PHARES

(30) Priority: 25.06.2010 JP 2010145480
(43) Date of publication of application: 01.05.2013
(73) Proprietor: HI-LEX Corporation, Takarazuka-shi, Hyogo 665-0845 (JP)
(72) Inventor: NISHIMURA, atsushi, Takarazuka-shi Hyogo 665-0845 (JP)
(74) Representative: Manitz Finsterwald Patent- und Rechtsanwaltspartnerschaft mbB
(86) International application number: PCT/JP2011/064693
(87) International publication number: WO 2011/162407

(56) References cited:
- EP-A1- 0 931 696
- WO-A1-2009/136250
- FR-A1- 2 402 549
- FR-A1- 2 918 937
- JP-A- 2009 269 474

## Description

### TECHNICAL FIELD

The present invention relates to a device for adjusting optical axes of headlights which operates right and left headlights simultaneously and making angles thereof approximately the same.

### BACKGROUND ART

On recent vehicles, a device which can set a preferred lighting range of headlights by changing angles of the headlights for the case where a lighting orientation of the headlights turns upward as a result of a rear side of a vehicle being lowered than a front side of a vehicle due to increase in a weight of the rear side, such as when passengers other than a driver ride only on rear seats or when luggage is loaded on a trunk room, or for the case where a lighting orientation of the headlights turns downward as a result of a front side of a vehicle being lowered than a rear side of a vehicle due to increase in a weight of the front side when a driver and a passenger ride only on driver's seat and front passenger seat. Angles of the headlights are changed by operating an electronic operation knob provided around the driver's seat, thus driving actuators provided on the headlights.

Meanwhile, there is a device for changing angles of headlights by operating an operation knob which is connected to one end of a control cable such as a pull control cable or a rotation transmission cable (torque cable), in which another end of the cable is connected to the headlight. In this device, the headlight is biased by a biasing member such that the headlight normally orients downward, and an angle of the headlight is changed in such a manner that by operating an operation knob, an inner cable of a control cable is pulled against a biasing force of the biasing member and is pushed back by a biasing force of the biasing member.

When considering a weight and cost of a device, it is preferable to use a control cable as compared with use of an actuator, and there are two types of devices using control cable, one is a device in which each of right and left headlights is operated by individual operation knobs respectively and another one is a device in which both of right and left headlights are simultaneously operated to change the angle by a single operation knob.

For example, Patent Document 1 describes a mechanism in which by rotating an operation knob provided around a driver's seat of a vehicle clockwise or counter-clockwise, a rod-like member connected to the operation knob and having an external thread formed thereon rotates, and by the rotation of the rod member, a substantially cubic driven member, on which an internal thread engaging with the external thread is formed, slides along a longitudinal direction of the rod member without rotating simultaneously, thereby push/pull operation of a control cable connected to the substantially cubic driven member varies the angle of the headlamp.

In addition, Patent Document 2 describes a leveling device for a headlight, in which a drive axis being rotatable by rotating a knob provided around a driver's seat is screw-engaged with a driven member moving in an axial direction of the drive axis by the rotation of the drive axis, and when the drive axis is rotated, a control cable connected to the headlight is operated via the driven member to vary the angle of the headlight.

### PRIOR ART DOCUMENTS

### PATENT DOCUMENTS

Patent Document 1: US 4,045,666 B
Patent Document 2: JP 1979-123559 U1

### SUMMARY OF THE INVENTION

### PROBLEM TO BE SOLVED BY THE INVENTION

However, in the case where each of right and left headlights is operated by individual operation knobs respectively, there is a problem that the operation is complicated, and in the case where both of right and left headlights are operated by a single operation knob as in Patent Documents 1 and 2, two control cables must be installed from the operation knob up to the right and left headlights by fixing several positions of an outer casing to a vehicle body without interfering with other parts. Therefore installation paths of the respective control cables are different from each other. In the case of a control cable installed in a curved form, a contact area of an outer surface of an inner cable and an inner surface of a control cable varies depending on a radius and a length of the curve, etc. and therefore, abrasion resistances are different respectively. When the radius of the curve is small, as explained in the above-mentioned explanation of a stroke loss, an outer casing receives, from the inner cable, a force to make the outer casing to be in a linear state, and therefore, a pressure per a unit area between the outer casing and the inner cable increases and an abrasion resistance increases. Similarly when a length of the curve is large, the inner cable is apt to be in a linear state, and therefore, a contact area between the outer surface of the inner cable and the inner surface of the outer casing is larger and an abrasion resistance increases. Accordingly, when biasing forces of right and left biasing members of the headlights are the same, operation loads of the right side and the left side are different between the pulling operation and returning operations due to a movement loss caused by elastic elongation and an abrasion resistance if the installation paths are different from each other.

In Patent Documents 1 and 2, two inner cables of control cables arranged in different installation paths are operated at the side of the operation knob with same operation loads, and as mentioned above, when the installation paths of two control cables are different, the respective operation loads are different. Further, since the operation loads are changed between the pulling and returning operations, the driven member inclines depending on the end play between the drive axis and an engagement portion of the driven member in each operation, and thus, the amount of the stroke loss is changed with the change of the installation paths of the control cables. Therefore, there is a problem that the amount of operation of the inner cables at the side of the operation knob does not correspond to the amount of operation of the inner cables at the side of the right and left headlights respectively.

WO2009/136250 A1 discloses a device in accordance with the preamble of claim 1.

Accordingly, an object of the present invention is to provide a device for operating headlights angles which can be easily adjusted with the passage of time.

### MEANS TO SOLVE THE PROBLEM

The device for adjusting optical axes of headlights of the present invention is a device comprising the features defined in claim 1.

### EFFECT OF THE INVENTION

(1) In the device for adjusting optical axes of headlights of the present invention, by using a biasing member for a drive member for biasing the drive member in a direction toward front end of the inner cable, the drive member is free from a backlash when changing over the pulling and returning operations, and since the drive member is biased by the biasing member for the drive member, feeling of handling is light and the operation is easy. Further, in the case where load efficiency changes due to change with the passage of time and replacement of parts, it can be adjusted easily by replacing the biasing member, and therefore, it is easy to keep the drive member in a constant state at the time of changing over of the pulling operation and the returning operation and a backlash can be prevented easily. Furthermore, the device for adjusting optical axes of headlights is compact since it is not necessary to widen its width.
(2) The device for adjusting optical axes of headlights comprises a case for housing the drive member, wherein the case is provided with a guide portion for guiding movement of the drive member by the pulling and returning operations and the drive member is provided with a slide contact portion slidably contacting with the guide portion, thereby enabling the drive member to move without a backlash by the guide portion.
(3) In the device for adjusting optical axes of headlights, wherein the operating member comprises a rotating shaft having a spiral convex portion on an outer periphery thereof, and the connecting portion comprises an engagement portion being engaged with the spiral convex portion to allow the drive member to move in an axial direction of the rotating shaft by the rotating the rotating shaft, thereby enabling the drive member to move easily in an axial direction.
(4) The headlights are provided with a first biasing member and a second biasing member, respectively, thereby making it easy to adjust the optical axes of the headlights because the cables are easily in a state having a tension.

### BRIEF DESCRIPTION OF THE DRAWINGS

FIG. 1 is a schematic view of the device for adjusting optical axes of headlights of the present invention.
FIG. 2(a) is a front view of the operation control device of one embodiment of the device for adjusting optical axis of the present invention. FIG. 2(b) is a perspective view of the operation control device of FIG. 2(a).
FIG. 3 is a cross-sectional view of the operation control device taken along the line A-A of FIG. 2.

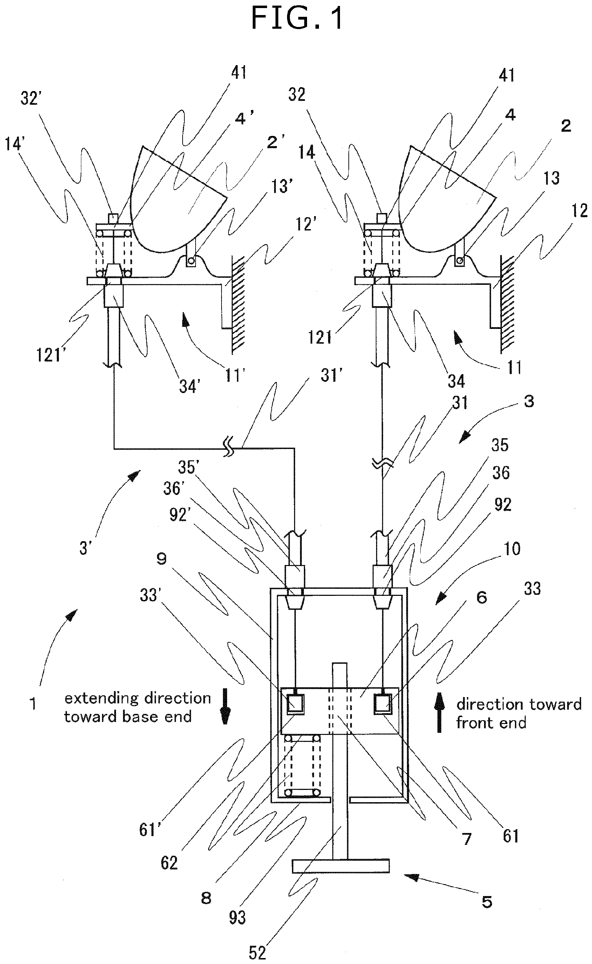

In a device 1 for adjusting optical axes of headlights of the present invention, as shown in FIG. 1, a first control cable 3 is installed to a right headlight 2. The first control cable 3 comprises a first inner cable 31 having a first front cable end 32 at its front end and a first base cable end 33 at its base end. By the engagement of a connection member 4 connected to the headlight 2 with the first front cable end 32, the first inner cable 31 is connected to the headlight 2 via the connection member 4. Similarly, a second control cable 3' is installed to a left headlight 2'. A second inner cable 31' has a second front cable end 32' and a second base cable end 33' at its base end. By the engagement of a connection member 4' connected to the headlight 2' with the second front cable end 32', the second inner cable 31' is connected to the headlight 2' via the connection member 4'.

The device 1 for adjusting optical axes of headlights comprises an operating member 5 conducting operation for adjusting an optical axis at the side of a driver's seat, and the operating member 5 is connected to a drive member 6 at a connecting portion 7 thereof. When operating the operating member 5 in an extending direction toward base end (downward direction in FIG. 1) which is a direction extending the first inner cable 31 toward the base end, the drive member 6 is operated to move in the extending direction toward base end by the operation of the operating member 5. Further, when operating the operating member 5 in a direction toward front end (upward direction in FIG. 1) which is a direction extending from the base end to the front end of the first inner cable 31, the drive member 6 is operated to move in the direction toward front end by the operation of the operating member 5.

On the drive member 6, the first base cable end 33 which is the base end of the first inner cable 31 and the second base cable end 33' which is the base end of the second inner cable 31' are connected to the drive member 6 and are arranged with the connecting portion 7 being in between them. The first base cable end 33 of the first inner cable is connected to a first coupling portion provided at the side of the first inner cable 31 from the connecting portion and the second base cable end 33' is connected to a second coupling portion provided at the other side.

In the device 1 for adjusting optical axes of headlights, in case of right-hand-drive vehicle, the operation control device 10 is located at the side of a driver's seat, i.e., at a right-hand side in a widthwise direction of the vehicle to enable the driver to operate the device. Therefore, the length of an installation path of the second control cable 3' is longer than that of the first control cable 3. In the device 1 for adjusting optical axes of headlights, the second base cable end 33' of the second inner cable 31' is connected to a second coupling portion 61' of the drive member 6, and further, a biasing member 8 for the drive member for biasing the drive member in the direction toward front end of the first inner cable 31 is provided at the side of the second coupling portion of the drive member. In addition, in the device 1 for adjusting optical axes of headlights shown in FIG. 1, the biasing member 8 for the drive member is arranged inside a case 9 constituting the operation control device 10 including the drive member 6 and is arranged between an inner surface 93 at the side of the base end of the case 9 and a base end 62 of the drive member 6. In order to easily mount the biasing member 8 for the drive member to the case 9, a mounting portion for biasing member, such as convex or concave portion, may be provided on the inner surface of the case 9 and also, similar mounting portion for biasing member may be provided on the drive member 6.

In the device 1 for adjusting optical axes of headlights, since the operating member 5 is provided near a driver's seat for easy operation, the first control cable 3 connected to the headlight 2 and the second control cable 3' connected to the headlight 2' are passed from the vicinity of the driver's seat through a bulk head and are installed in an engine room to the headlights respectively by fixing several points of the outer casing to a vehicle body so as not to interfere with other parts. However, the second control cable 3' is connected to the headlight at a distal side from the driver's seat and its installation path is longer than that of the first control cable 3. Therefore, load efficiency of the first control cable 3 is lower than that of the second control cable 3'. Particularly in many cases, the control cable connected to the headlight at a distal side is installed with a radius of a curve being small and a length of a curve being long at several portions in an engine room and therefore, its load efficiency is usually small. In such cases, when the drive member 6 moves in the extending direction toward base end by the pulling operation of the operating member 5, an operation load of the second control cable 3' becomes larger than that of the first control cable 3. On the contrary, when the drive member 6 moves in a direction toward front end by the returning operation of the operating member 5, the operation load of the first control cable 3 becomes larger than that of the second control cable 3', which is reverse to the case of the pulling operation. When such reverse phenomenon occurs, if there is a gap at the connecting portion 7 between the operating member 5 and the drive member 6, inclination of the drive member arises due to the difference in the operation load. The direction of this inclination in the pulling operation differs from that in the returning operation, and thus, a backlash occurs due to the change of the inclination. When such backlash occurs, a force applied to the headlights 2, 2' in pulling operation is not equal to that in returning operation, which makes it difficult to adjust optical axes.

In the device for adjusting optical axes of headlights, the biasing member 8 for the drive member biases a portion of the drive member 6 to which the second base cable end 33' of the second control cable 3' having a lower load efficiency is connected. Therefore, between pulling operation and returning operation, the relationship of the applied external force to the drive member 6 around the connecting portion 7 as an axis between the first control cable side and the second control cable side is not changed. Therefore, there is substantially no difference in the inclination of the drive member 6 between the pulling operation and the returning operation. Thus, by using the biasing member 8 for the drive member, the pulling operation and the returning operation are carried out with the drive member being kept in a constant inclination state, and therefore, forces applied to the headlights 2 and 2' can be substantially constant between the pulling operation and the returning operation. In addition, as compared with the case of achieving a similar effect by a structure adopting lever ratio where a first coupling portion 61 and a second coupling portion 61' of the drive member are arranged at different distances from the connecting portion 7, the headlight optical axis adjusting device 1 is not subject to limitation in the respective distances from the connecting portion 7 to the first coupling portion 61 and the second coupling portion 61' and so, the distances can be made short. Therefore, it is possible to narrow a width of the case 9 housing the drive member 6 and the configuration of the device can be compact. Therefore, flexibility in a layout of panels around the driver's seat can be secured easily. Further, when a biasing force of the biasing member 8 for the drive member is set at a predetermined value or more, it is not necessary to replace the driving member with a driving member having a proper lever ratio structure in the case where the load necessary for the operations of the headlight 2 and headlight 2' changes due to replacement of parts necessary for operating the headlights 2 and 2' such as the first control cable 3, the second control cable 3', a first headlight angle changing means 11 and a second headlight angle changing means 11' or due to a change of the parts with the passage of time, and in addition, since the drive member is biased by the biasing member for the drive member, feeling of the handling can be made light. Further, a material and a shape of the biasing member 8 for the drive member are not limited particularly as long as the biasing member 8 can prevent a backlash of the drive member at the time of changing over of the pulling operation and the returning operation, and a coil spring can be used suitably.

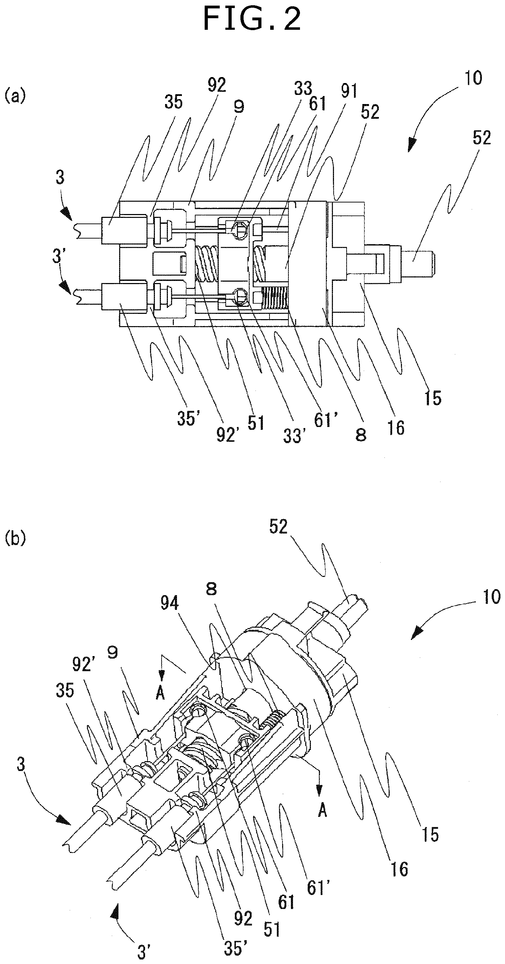

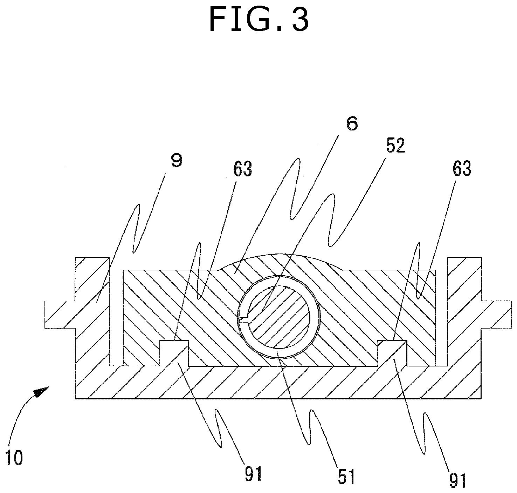

As shown in FIG. 2(a) and FIG. 3 which is a cross-sectional view taken along the line A-A of FIG. 2, the device 1 for adjusting optical axes of headlights comprises the case 9 for housing the drive member 6 in the operation control device 10, and the case 9 may be provided with the guide portions 91 for guiding the movement of the drive member 6 for the pulling operation and the returning operation. When the guide portions 91 are provided and for example, slide contact portions 63 slidably contacting with the guide portions 91 are provided in the drive member 6, the slide contact portions 63 slides with respect to the guide portions 91. Therefore, stable movement of the drive member 6 with less backlash thereof can be carried out, thereby assuring easier adjustment of the optical axes of the headlights 2, 2'. The number of guide portions and a width and a height thereof are not limited particularly as far as there is no interference with the movement of the drive member 6, and the guide portions may be formed so as to correspond to the slide contact portions 63.

Further, in the operation control device 10 of the device 1 for adjusting optical axes of headlights, as shown in FIG. 2, the operating member 5 may comprise a rotating shaft 52 having a spiral convex portion 51 on an outer periphery thereof, and the connecting portion 7 of the drive member 6 may have an engagement portion (not illustrated) being engaged with the spiral convex portion 51. In FIG. 2, a first casing cap 35 at the base end of the first control cable 3 is engaged with a first engagement portion 92 of the case 9, and the first base cable end 33 is connected at the first coupling portion. A second casing cap 35' at the base end of the second control cable 3' is engaged with a second engagement portion 92' of the case 9 and the second base cable end 33' is connected at the second coupling portion 61'. The drive member 6 connected to the first control cable 3 and the second control cable 3' is movable in an axial direction of the rotating shaft 52 by rotating the rotating shaft 52 due to the engagement of the spiral convex portion 51 with the engagement portion of the drive member 6, which makes it possible to move the drive member 6 smoothly and stably by the pulling operation and the returning operation and easily adjust the optical axes of the headlights 2 and 2' since unnecessary vibration of the drive member does not occur. In addition, in the operation control device shown in FIG. 2, as shown in FIG. 2(b), the rotating shaft 52 is inserted into a hole 94 and extends outside. The rotating shaft extending outside is insert-fitted through a mounting member 15 for enabling mounting on a panel or the like, and the mounting member 15 is held on a mounting member holding portion 16 to allow the rotating shaft 52 to rotate. A knob (not illustrated) is mounted at a base end of the rotating shaft 52 for easy rotation of the shaft.

In the device 1 for adjusting optical axes of headlights shown in FIG. 1, the first headlight angle changing means 11 provided with a first biasing member for biasing the first inner cable toward the headlight 2 may be provided, and the second headlight angle changing means 11' provided with a second biasing member for biasing the second inner cable toward the headlight 2' may be provided. The first headlight angle changing means 11 connected to the headlight 2 comprises a bracket 12 connected to the headlight 2 and connected to the first casing cap 34 at the front end of the first control cable 3 and a connection member 4 connected to the headlight 2 and engaged with the first front cable end 32 of the first inner cable 31. At the time of the pulling operation by operating the operating member 5 of the device 1 for adjusting optical axes of headlights, the drive member 6 moves in the extending direction toward base end, and the first front cable end 32 of the first inner cable 31 also moves according to the operation of the drive member 6. At the time of the returning operation, the drive member 6 moves in the direction toward front end, and the first front cable end 32 also moves according to the operation of the drive member 6. Accordingly, the connection member 4 engaged with the first front cable end 32 moves the headlight 2 according to the movement of the drive member 6. The headlight 2 is connected to the bracket 12 by means of a rotational axis 13, and rotates around the rotational axis 13 by the movement of the connection member 4.

Similarly, the second headlight angle changing means 11' connected to the headlight 2' comprises a bracket 12' connected to the headlight 2' and connected to a second casing cap 34' at the front end of the second control cable 3' and a connection member 4' connected to the headlight 2' and engaged with the second front cable end 32' of the second inner cable 31'. At the time of the pulling operation by operating the operating member 5 of device 1 for adjusting optical axes of headlights, the second front cable end 32' of the second inner cable 31' also moves in an extending direction toward base end according to the operation of the drive member 6. At the time of the returning operation, the second front cable end 32' also moves in the direction toward front end. Accordingly, the connection member 4' engaged with the second front cable end 32' moves the headlight 2' connected to the bracket 12' by means of the rotational axis 13' according to the movement of the drive member 6, and the headlight 2' rotates around the rotational axis 13'. Thus, in the device 1 for adjusting optical axes of headlights, since the headlights 2 and 2' can rotates around the rotational axis by operating the operating member 5, the optical axes of the headlights 2 and 2' can be adjusted.

In the device 1 for adjusting optical axes of headlights shown in FIG. 1, the first biasing member 14 is connected to the connection member 4 and is arranged so as to be biased in the moving direction of the first cable end 32 when the first cable end 32 moves according to the movement of the drive member 6. The first biasing member 14 is arranged between a first inner cable engagement portion 41 of the connection member 4 engaged with the first inner cable 31 and a casing cap engagement portion 121 of the bracket 12 engaged with the first casing cap 34 at the front end. By such arrangement of the first biasing member 14, at the time of the returning operation of the operating member 5, the movement of the connection member 4 in the direction toward front end following the movement of the first front cable end 32 can be carried out easily with a simple configuration. Further, the second biasing member 14' also is connected to the connection member 4' in the same manner as in the first biasing member 14, and is arranged so as to be biased in the moving direction of the second front cable end 32' when the second front cable end 32' moves according to the movement of the drive member 6. The second biasing member 14' is arranged between a second inner cable engagement portion 41' of the connection member 4' engaged with the second inner cable 31' and a casing cap engagement portion 121' of the bracket 12' engaged with a second casing cap 34' at the front end. By such arrangement of the second biasing member 14, at the time of the returning operation of the operating member 5, the movement of the connection member 4 in the direction toward front end following the movement of the first front cable end 32 can be carried out easily with a simple configuration in the same manner as in the first biasing member 14.

The device 1 for adjusting optical axes of headlights has the first control cable 3 and the second control cable 3' for connecting the drive member 6 to the headlights 2, 2', respectively. These control cables are not limited particularly as far as they can rotate the headlights 2 and 2' according to the movement of the drive member 6 by the operation of the operating member 5. For example, it is possible to use first and second inner cables having an outer diameter of 1.0 mm and a stranded steel wire construction of 1 × 7, and to use a second outer casing which has an outer diameter of 4.2 mm and a length of 1852 mm and comprises an inner layer made of polyethylene and having an inner diameter of 1.5 mm, a reinforcement layer provided around the inner layer by winding spirally 16 steel wires having an outer diameter of 0.5 mm and a polypropylene coating coated on the reinforcement layer, and a first outer casing having a length of 875 mm and having the same configuration as that of the second outer casing.

### Explanation of Symbols

1: Device for Adjusting Optical Axes of Headlights
2, 2': Headlights
3: First Control Cable
3': Second Control Cable
4, 4': Connection Members
5: Operating Member
6: Drive Member
7: Connecting Portion
8: Biasing Member for Drive Member
9: Case
11: First Headlight Angle Changing Means
11': Second Headlight Angle Changing Means
12, 12': Brackets
13, 13': Rotational Axes
14: First Biasing Member
14': Second Biasing Member
15: Mounting Member
16: Mounting Member Holding Portion
31: First Inner Cable
31': Second Inner Cable
32: First Front Cable End
32': Second Front Cable End
33: First Base Cable End
33': Second Base Cable End
34: First Casing Cap at Front End
34': Second Casing Cap at Base End
35: First Casing Cap at Base End
35': Second Casing Cap at Base End
41: First Inner Cable Engagement Portion
41': Second Inner Cable Engagement Portion
51: Spiral Convex Portion
52: Rotating Shaft
61: First Coupling portion
61': Second Coupling portion
63: Slide Contact Portion
91: Guide Portion

## Claims

1. A device (1) for adjusting optical axes of headlights, comprising one headlight (2), another headlight (2'), a first control cable (3) with a first inner cable (31) and a second control cable (3') with a second inner cable (31'), wherein a front end (32) of the first inner cable (31) of the first control cable (3) is connected to the one headlight and a front end (32') of the second inner cable (31') of the second control cable is connected to the other headlight, said second control cable (3') having a longer distance of installation path than the first control cable (3), and the optical axes of the headlights are adjusted by operating the first and second inner cables (31, 31'), the device further comprising
an operating member (5) for operating to adjust the optical axes, and
a drive member (6) connected to the operating member at a connecting portion (7) and configured to move the first and second
inner cables (31, 31') in a direction extending from the front end (32, 32') toward a base end (33, 33') of the first and second inner cables and in a direction extending from the base end (33, 33') toward the front end (32, 32') of the first and second inner cables by respective pulling and returning operations of the operating member,
wherein in the drive member (6), the base end (33) of the first inner
cable and the base end (33') of the second inner cable are connected to a first coupling portion (61) and a second coupling portion (61'), respectively, the first coupling portion (61) is provided on one side of the drive member (6) and the second coupling portion (61') is provided on the other side of the drive member (6) with the connecting portion (7) being provided in between the first coupling portion and the second coupling portion,
**characterized in that**
the device (1) further comprises a biasing member (8) for the drive member (6) connected to the second coupling portion (61') of the drive member (6) and biasing the drive member (6) in the direction extending from the base end toward the front end of the second inner cable (31').

2. The device for adjusting optical axes of headlights of claim 1, wherein the device comprises a case (9) for housing the drive member (6),
the case is provided with a guide portion (91) for guiding movement of the drive member (6) by the pulling and returning operations and the drive member (6) is provided with a slide contact portion slidably contacting with the guide portion.

3. The device for adjusting optical axes of headlights of claim 1 or 2, wherein the operating member comprises a rotating shaft (52) having a spiral convex portion on an outer periphery thereof, and
the connecting portion comprises an engagement portion being engaged with the spiral convex portion to allow the drive member (6) to move in an axial direction of the rotating shaft by rotating the rotating shaft(52).

4. The device for adjusting optical axes of headlights of any one of claims 1 to 3, wherein the headlights comprise a first headlight angle changing means (11) connected to the first inner cable (31) and a second headlight angle changing means (11') connected to the second inner cable (31') respectively, and the first headlight angle changing means is provided with a first biasing member (14) for biasing the first inner cable and the second headlight angle changing means is provided with a second biasing member (14') for biasing the second inner cable.

## Patentansprüche

1. Vorrichtung (1) zum Einstellen optischer Achsen von Scheinwerfern, umfassend:
einen Scheinwerfer (2), einen anderen Scheinwerfer (2'), ein erstes Steuerseil (3) mit einem ersten Innenseil (31) und ein zweites Steuerseil (3') mit einem zweiten Innenseil (31'), wobei ein vorderes Ende (32) des ersten Innenseils (31) des ersten Steuerseils (3) mit dem einen Scheinwerfer verbunden ist und ein vorderes Ende (32') des zweiten Innenseils (31') des zweiten Steuerseils mit dem anderen Scheinwerfer verbunden ist, wobei das zweite Steuerseil (3') eine längere Distanz eines Installationspfades aufweist, als das erste Steuerseil (3), und die optischen Achsen der Scheinwerfer dadurch eingestellt werden, dass das erste und zweite Innenseil (31, 31') betätigt werden, wobei die Vorrichtung ferner umfasst:
ein Betätigungselement (5) zum Betätigen einer Einstellung der optischen Achsen, und
ein Antriebselement (6), das mit dem Betätigungselement an einem Verbindungsabschnitt (7) verbunden und derart konfiguriert ist, das erste und zweite Innenseil (31, 31') in einer Richtung, die sich von dem vorderen Ende (32, 32') zu einem Basisende (33, 33') des ersten und zweiten Innenseils erstreckt, und in einer Richtung, die sich von dem Basisende (33, 33') zu dem vorderen Ende (32, 32') des ersten und zweiten Innenseils erstreckt, durch jeweilige Zug- und Rückstellbetriebsabläufe des Betätigungselementes zu bewegen, wobei in dem Antriebselement (6) das Basisende (33) des ersten Innenseils und das Basisende (33') des zweiten Innenseils mit einem ersten Kopplungsabschnitt (61) bzw. einem zweiten Kopplungsabschnitt (61') verbunden sind, wobei der erste Kopplungsabschnitt (61) auf einer Seite des Antriebselementes (6) vorgesehen ist und der zweite Kopplungsabschnitt (61') auf der anderen Seite des Antriebselementes (6) vorgesehen ist, wobei der Verbindungsabschnitt (7) zwischen dem ersten Kopplungsabschnitt und dem zweiten Kopplungsabschnitt vorgesehen ist,
**dadurch gekennzeichnet, dass**
die Vorrichtung (1) ferner ein Vorspannelement (8) für das Antriebselement (6) umfasst, das mit dem zweiten Kopplungsabschnitt (61') des Antriebselements (6) verbunden ist und das Antriebselement (6) in der Richtung vorspannt, die sich von dem Basisende zu dem vorderen Ende des zweiten Innenseils (31') erstreckt.

2. Vorrichtung zum Einstellen optischer Achsen von Scheinwerfern nach Anspruch 1, wobei die Vorrichtung ein Gehäuse (9) zur Aufnahme des Antriebselements (6) umfasst, wobei das Gehäuse mit einem Führungsabschnitt (91) zum Führen einer Bewegung des Antriebselements (6) durch die Zug- und Rückstellbetriebsabläufe versehen ist und das Antriebselement (6) mit einem Gleitkontaktabschnitt versehen ist, der gleitend mit dem Führungsabschnitt in Kontakt steht.

3. Vorrichtung zum Einstellen optischer Achsen von Scheinwerfern nach einem der Ansprüche 1 oder 2, wobei das Betätigungselement eine Rotationswelle (52) umfasst, die einen spiralen konvexen Abschnitt an ihrem Außenumfang aufweist, und
der Verbindungsabschnitt einen Eingriffsabschnitt umfasst, der mit dem spiralen konvexen Abschnitt in Eingriff steht, um zu ermöglichen, dass sich das Antriebselement (6) in einer axialen Richtung der rotierenden Welle durch Rotieren der rotierenden Welle (52) bewegt.

4. Vorrichtung zum Einstellen optischer Achsen von Scheinwerfern nach einem der Ansprüche 1 bis 3, wobei die Scheinwerfer ein erstes Mittel (11) zum Ändern des Scheinwerferwinkels, das mit dem ersten Innenteil (31) verbunden ist, und ein zweites Mittel (11') zum Ändern des Scheinwerferwinkels umfassen, das mit dem zweiten Innenseil (31') verbunden ist, und wobei das erste Mittel zum Ändern des Scheinwerferwinkels mit einem ersten Vorspannelement (14) zum Vorspannen des ersten Innenseils versehen ist und das zweite Mittel zum Ändern des Scheinwerferwinkels mit einem zweiten Vorspannelement (14') zum Vorspannen des zweiten Innenseils versehen ist.

## Revendications

1. Dispositif (1) pour ajuster les axes optiques de phares, comprenant
un premier phare (2), un autre, second phare (2'), un premier câble de commande (3) avec un premier câble intérieur (31) et un second câble de commande (3') avec un second câble intérieur (31'), dans lequel une extrémité avant (32) du premier câble intérieur (31) du premier câble de commande (3) est connectée au premier phare et une extrémité avant (32') du second câble intérieur (31') du second câble de commande est connectée au second phare, ledit second câble de commande (3') ayant un trajet d'installation présentant une distance plus grande que le premier câble de commande (3), et les axes optiques des phares sont ajustés par actionnement du premier et du second câble intérieur (31, 31'), le dispositif comprenant en outre
un élément d'actionnement (5) destiné à être actionné pour ajuster les axes optiques, et
un élément d'entraînement (6) connecté à l'élément d'actionnement au niveau d'une portion de connexion (7) et configuré pour déplacer le premier et le second câble (31, 31') dans une direction s'étendant depuis l'extrémité avant (32, 32') vers une extrémité de base (33, 33') du premier et du second câble intérieur et dans une direction s'étendant depuis l'extrémité de base (33, 33') vers l'extrémité avant (32, 32') du premier et du second câble intérieur par des opérations respectives de traction et de retour de l'élément d'actionnement,
dans lequel, dans l'élément d'entraînement (6), l'extrémité de base (33) du premier câble intérieur et l'extrémité de base (33') du second câble intérieur sont connectées à une première portion de couplage (61) et à une seconde portion de couplage (61'), respectivement, la première portion de couplage (61) étant prévue sur un côté de l'élément d'entraînement (6) et la seconde portion de couplage (61') étant prévue sur l'autre côté de l'élément d'entraînement (6), et la portion de connexion (7) étant prévue entre la première portion de couplage et la seconde portion de couplage,
**caractérisé en ce que**
le dispositif (1) comprend en outre un élément de sollicitation (8) pour l'élément d'entraînement (7) connecté à la seconde portion de couplage (61') de l'élément d'entraînement (6) et sollicitant l'élément d'entraînement (6) dans la direction s'étendant depuis l'extrémité de base vers l'extrémité avant du second câble intérieur (31').

2. Dispositif pour ajuster les axes optiques de phares selon la revendication 1, dans lequel le dispositif comprend un boîtier (9) pour loger l'élément d'entraînement (6),
le boîtier est doté d'une portion de guidage (91) pour guider un mouvement de l'élément d'entraînement (6) par les opérations de traction et de retour, et l'élément d'entraînement (6) est doté d'une portion de contact coulissant en contact de coulissement avec la portion de guidage.

3. Dispositif pour ajuster les axes optiques de phares selon la revendication 1 ou 2, dans lequel l'élément d'actionnement comprend un arbre rotatif (52) ayant une portion convexe spiralée sur sa périphérie extérieure, et
la portion de connexion comprend une portion d'engagement qui est engagée avec la portion convexe spiralée pour permettre à l'élément d'entraînement (6) de se déplacer dans une direction axiale de l'arbre rotatif par rotation de l'arbre rotatif (52).

4. Dispositif pour ajuster les axes optiques de phare selon l'une quelconque des revendications 1 à 3, dans lequel les phares comprennent un premier moyen de changement d'angle de phare (11) relié au premier câble intérieur (31), et un second moyen de changement d'angle de phare (11') relié au second câble intérieur (31') respectivement, et le premier moyen de changement d'angle de phare est doté d'un premier élément de sollicitation (14) pour solliciter le premier câble intérieur, et le second moyen de changement d'angle de phare est doté d'un second élément de sollicitation (14') pour solliciter le second câble intérieur.
